# EUROPEAN PATENT APPLICATION

(11) **EP 2 763 226 A1**
(43) Date of publication of application: **06.08.2014**
(21) Application number: 11873354.2
(22) Date of filing: 29.09.2011
(51) Int. Cl.: H01M 8/04, H01M 8/12

(54) **SOLID ELECTROLYTE FUEL CELL**

(71) Applicant: Toto Ltd., Fukuoka 802-8601 (JP)
(72) Inventor: OTSUKA Toshiharu, Kitakyushu-shi Fukuoka 802-8601 (JP); TSUCHIYA Katsuhisa, Kitakyushu-shi Fukuoka 802-8601 (JP); SHIGEZUMI Tsukasa, Kitakyushu-shi Fukuoka 802-8601 (JP); OOE Toshiharu, Kitakyushu-shi Fukuoka 802-8601 (JP); NAKANO Kiyotaka, Kitakyushu-shi Fukuoka 802-8601 (JP); MATSUO Takuya, Kitakyushu-shi Fukuoka 802-8601 (JP)
(74) Representative: Witte, Weller & Partner Patentanwälte mbB
(86) International application number: PCT/JP2011/072401
(87) International publication number: WO 2013/046396

(57) **Abstract**

The invention is a solid oxide fuel cell system (1) including: a fuel cell module (2), a fuel flow regulator unit (38), a first power demand detection device (110a), a control section (110) for controlling a fuel supply amount and setting the current value extractable from the fuel cell module, an inverter (54) for extracting current in a range not exceeding the extractable current value, and a power state detecting sensor (126) for detecting actual extracted current value; whereby if actual extracted current value declines, then under circumstances where power demand begins to rise in a state of extra margin in the fuel supply amount after the controller suddenly decreases the extractable current value and suddenly reduces the electrical collector, the controller increases the extractable current value at a high current rise rate of change.

## Description

### Technical Field

0001 The present invention pertains to a solid oxide fuel cell system, and more particularly to a solid oxide fuel cell system for generating variable electrical power in response to power demand.

### Background Art

0002 In recent years, various solid oxide fuel devices comprising fuel cells capable of obtaining electrical power by generating electricity using fuel (hydrogen gas) and air, as well as auxiliary equipment for running such fuel cells, have been proposed as next-generation energy sources.

Japanese Unexamined Patent Application H.7-307163 (Patent Document 1) sets forth a fuel cell device. In this fuel cell device, the electrical power generated is varied in response to load.

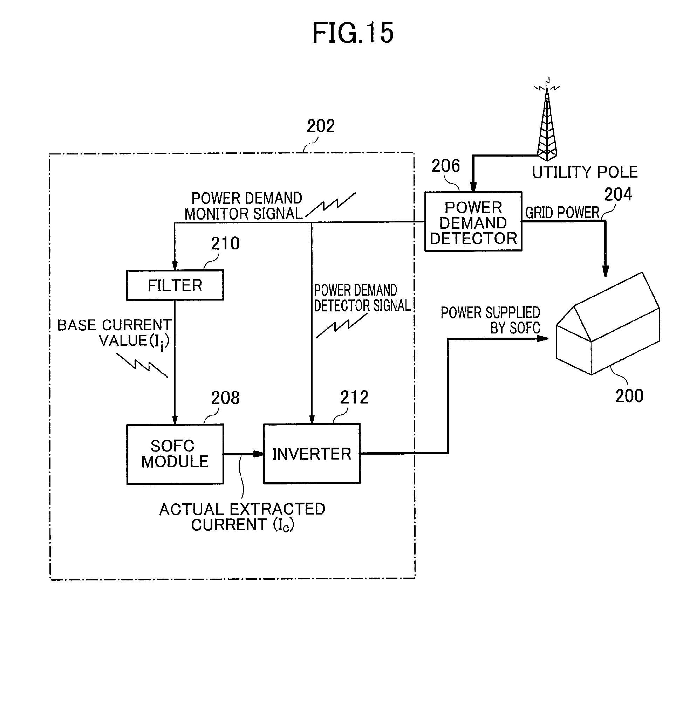

0003 Here, referring to Fig. 15, we explain a power supply system utilizing a fuel cell. Fig. 15 shows an example of a conventional system for supplying electrical power to a residence using a fuel cell. In the system, electrical power consumed by a residence 200 is supplied by fuel cell 202 and grid power 204. Normally the maximum consumed power consumed by residences is larger than the maximum rated power generatable by fuel cell 202, therefore even in a residence 200 utilizing a fuel cell 202, that insufficiency is made up for by grid power 204, and electrical power is supplied to the residence from fuel cell 202 and grid power 204. Furthermore, even in situations where the generating capacity of fuel cell 202 is below the maximum rated power for a residence, a portion of the electrical power consumption of residence 200 is normally supplied from the grid power 204 in order to prevent reverse current flow of generated power to current power 204.

0004 Grid power 204 is power fed from a transmission line to an electrical distribution panel inside a residence, and is purchased power. In other words, the total of the electrical power generated by fuel cell 202 and grid power 204 corresponds to the power consumed by residence 200. Fuel cell 202 obtains a monitor signal from power demand detector 206 of the electrical power purchased by residence 200, and based on this it varies the power generated by fuel cell 202. I.e., fuel cell 202 determines a base current Ii expressing the current which fuel cell 202 should produce based on the monitor signal obtained from power demand detector 206, and controls the amount of fuel, etc. supplied to fuel cell module 208 to enable production of this base current Ii. Also, base current Ii is set at or below a value corresponding to the maximum rated power of fuel cell 202, regardless of the power consumed by residence 200.

0005 The fuel cell module 208 built into fuel cell 202 generally has an extremely slow response, making it difficult to change generated power to follow changes in power consumed by residence 200. Therefore the base current Ii signal which instructs an electrical generation amount to fuel cell module 208 is determined by applying a filter 210 which performs integration or the like on the monitor signal, so that it changes extremely gradually compared to the change in power consumption.

0006 Fuel cell 202 supplies fuel cell module 208 with an amount of fuel proportional to base current Ii so that fuel cell module 208 has the capacity to produce the base current Ii. At the same time, inverter 212 extracts a DC extracted current Ic from fuel cell module 208 and converts this to AC and supplies it to residence 200. The actual extracted current Ic which inverter 212 extracts from fuel cell module 208 is at all times set at or below the value of base current Ii, and does not exceed the generating capacity of fuel cell module 208. If a current equal to or greater than the generating capacity corresponding to the fuel supply amount, etc. determined based on base current Ii is extracted from fuel cell module 208, then there is a risk that fuel depletion in fuel cells within the fuel cell module 208 will occur, dramatically shortening the life span of the fuel cells and damaging the fuel cells.

0007 At the same time, because of sharp fluctuations in the power consumed by residence 200, when consumed power suddenly drops, the residence 200 power consumption drops further than the power corresponding to base current Ii, which is slowly varied.

0008 In the fuel cell apparatus set forth in Japanese Unexamined Patent Application H07-307163, when the current value is increased to adapt to this type of delay in fuel cell module 208, the set current value is updated through a delay setting instrument, and problems such as fuel depletion are prevented by delaying the increase in the set current value. Also, in this fuel cell apparatus, when updating the set current value, changes are always made in increments of subtracted current values or added current values, therefore the rate of change at which the said current value is changed is always fixed.

### Prior Art References

0009

### Patent Documents

Patent Document 1
Japanese Unexamined Patent Application H7-307163

### Summary of the Invention

### Problems the Invention Seeks to Resolve

0010 In the solid oxide fuel cell system set forth in Japanese Published Unexamined Patent Application H7-307163, current extracted from the fuel cell is increased after a fixed time delay following an increase in fuel gas, therefore problems such as fuel depletion can be prevented, but supplied fuel is wasted. I.e., there are repeated sudden increases and decreases in power demand relative to the extremely slow-response fuel cell module, making it difficult to sufficiently increase generating efficiency with a constant fixed-delay control.

0011 Therefore the present invention has the object of providing a solid oxide fuel cell system capable of increasing generating efficiency while reliably avoiding damage to the fuel cell module by fuel depletion or the like, and permitting stable fuel cell module operation.

### Means for Resolving Problems

0012 To solve the above-described problems, the present invention is a solid oxide fuel cell system for generating variable power in response to power demand, comprising: a fuel cell module that generates electricity using supplied fuel; a fuel supply device that supplies fuel to the fuel cell module; a power demand detection device that detects power demand; a controller that controls the amount of fuel supplied by the fuel supply device based on the power demand detected by the power demand detection device, and that sets an extractable current value, being the maximum current value extractable from the fuel cell module in accordance with the condition of the fuel cell module; an inverter that converts current from the fuel cell module to alternating current within a range not exceeding the extractable current value; and an extracted current detection device that detects an actual extracted current value actually extracted from the fuel cell module at the inverter; wherein the controller controls the fuel supply device so that when increasing the extractable current value, the extractable current value is increased at a predetermined first current increase rate of change, whereas when the actual extracted current value detected by the extracted current detection device decreases, the extractable current value is suddenly decreased, and the fuel supply amount is reduced at more of a delay than the reduction in extractable current value in order to follow this reduction in extractable current value, whereas when power demand begins to increase in a state in which there is extra margin in the fuel supply amount after suddenly reducing the extractable current value, the extractable current value is increased at a second current increase rate of change, which is larger than the first current increase rate of change.

0013 In the invention thus constituted, the controller controls the amount of fuel supplied by a fuel supplying means to provide fuel to a fuel cell module based on power demand detected by a power demand detection device. Furthermore, the controller sets an extractable current value, which is the maximum current value extractable from the fuel cell module according to the state of the fuel cell module. The inverter extracts power from the fuel cell module in a range within which current responsive to power demand does not exceed the extractable current value. The controller increases the extractable current value at a predetermined first current increase rate of change when raising the extractable current value, and suddenly decreases the extractable current value when the actual current value detected by the extracted current detection device decreases. Furthermore, the controller controls the fuel supply device so that the fuel supply amount is reduced more than the drop in the extractable current value, so as to follow the drop in the extractable current value. Also, when power demand begins to rise in the presence of an extra margin in the fuel supply amount after the extractable current value is suddenly decreased, the controller increases the extractable current value at a second current rise rate of change which is larger than a first current rise rate of change.

0014 In general, the inverter is controlled with high responsiveness so that it can extract current needed from the fuel cell module in response to suddenly changing power demands. On the other hand, if the fuel supply amount supplied to the fuel cell module is suddenly changed, electrical generation by the fuel cell module can become unstable, preventing achievement of highly responsive control. In addition, no fuel depletion is caused even if the extractable current value and fuel supply amount are suddenly decreased in response to a sudden drop in power demand, but the fuel cell module experiences a sudden temperature drop, and sufficient generation cannot be achieved until the temperature recovers. According to the invention, the controller controls the fuel supply device so that the fuel supply amount is reduced later than the reduction in the extractable current value, even when the extractable current value is suddenly reduced, so sudden temperature drops and the like in the fuel cell module can be avoided. Since the fuel supply amount is reduced after a delay following a sudden reduction in the extractable current value, a state arises in which there is extra margin in the fuel supply amount relative to the extractable current value. In such cases, the controller increases the extractable current value at a second current rise rate of change which is larger than a first current rise rate of change, therefore following characteristics relative to recovery in power demand can be improved while suppressing fuel wastage, and the frequency of reliance on commercial power can be reduced and energy saved. If there is a large difference between the extractable current value and actual extracted current value when an extra fuel margin is created to speed up inverter power extraction within that range, then if power demand suddenly recovers, the inverter tries to follow that recovery and suddenly extract current, but if that is allowed, then current extraction exceeding the extractable current value occurs due to control overshoot, etc., resulting in a new problem of damage to the cells; however in this invention the extractable current value is increased at a managed amount after first reducing the extractable current value, so inverter current extraction can be balanced at a high level with following characteristics in relation to power demand and load on the cells.

0015 In the invention, when the actual extracted current value drops, the controller suddenly reduces extractable current value so as to follow a reduction in actual extracted current value, and then the controller preferably reduces the fuel supply amount, if a difference between the current corresponding to the fuel supply amount and the extractable current value is equal to or greater than a predetermined amount during a predetermined fuel reduction waiting time, or if the difference between the current corresponding to the fuel supply amount and the extractable current value expands.

0016 Following characteristics can be increased during the rise that accompanies a recovery in power demand by reducing the delay in the fuel supply amount following a reduction of the extractable current value, however if there is too great a deviation following the reduction in extractable current value between the fuel supply amount and the extractable current value, or if the state of no reduction in the fuel supply amount persists, this can indeed be described as a waste of fuel. In the invention thus constituted, if there is a difference greater than a predetermined amount between the current corresponding to the fuel supply amount and the extractable current value during a standby period in which fuel reductions are suppressed following a drop in the extractable current value, or if the deviation expands, the fuel supply amount is reduced; then in a state with too much excess fuel relative to a power demand recovery target, or in which a judgment is made that the possibility of a power demand recovery is low, then a state in which the supply of fuel is deemed excessive will be promptly avoided, thereby avoiding wasteful fuel consumption and conserving energy, while on the other hand permitting quick load following upon recovery of demand, reducing the frequency of reliance on commercial power and indeed improving energy conservation performance.

0017 In the invention, if the difference between the actual extracted current value and the extractable current value exceeds a predetermined amount, the controller controls the fuel supply device to reduce the extractable current value, then reduce the fuel supply amount at a delay, whereas if the difference between the actual extracted current value and the extractable current value is equal to or less than the predetermined amount, the controller does not reduce the extractable current value.

0018 In the invention thus constituted, if the difference between the actual extracted current value and the extractable current value is equal to or less than a predetermined amount, the extractable current value is not reduced. This provides an excellent practical benefit, since under circumstances in which the difference between actual extracted current value and extractable current value is small, there is of course no reduction in the extractable current value, and the deviation is small even if the inverter follows a recovery in power demand, so there is no problem with control overshoot or the like, and effects on cells can be avoided, allowing following speed with respect to power demand to be greatly increased.

0019 In the invention, when reducing the extractable current value, the controller preferably reduces the extractable current value down to the actual extracted current value.

In the invention thus constituted, the fuel supply amount reduction is delayed, then the extractable current value is reduced to the minimum necessary actual extracted current value. By reducing the extractable current value down to the actual extracted current value, the inverter becomes unable to freely set the amount of increase per unit time in the actual extracted current value. Therefore power demand following by the actual extracted current value can be completely controlled by controlling the extractable current value. This enables complete avoidance of the damage to cells resulting from the control overshoots which is prone to occur when the deviation between the extractable current value and the actual extracted current value is large.

0020 In the invention, when the actual extracted current value has dropped, the controller suddenly reduces the extractable current value to follow the drop in the actual extracted current value, then if the power demand starts to rise during the fuel supply amount is subsequently maintained at a fixed level, the controller increases the extractable current value at the second current rise rate of change which is larger than the first current rise rate of change.

0021 In the invention thus constituted, if the fuel supply amount is maintained at a fixed level after a sudden reduction in the extractable current value in order to follow a reduction in actual extracted current value, the extractable current value is increased at a large current rise rate of change immediately following the timing at which power demand begins to rise, therefore the extractable current value can be rapidly increased with assured margin in the fuel supply amount, and following characteristics relative to changes in power demand can be improved while reliably and stably operating the fuel cell module.

### Effect of the Invention

0022 The invention thus constituted provides a highly practical solid oxide fuel cell system with which energy conservation performance and improved load following relative to power demand can both be achieved at a high level while reducing load on the fuel cell module.

### Brief Description of Figures

0023
Fig. 1: An overview diagram showing a solid oxide fuel cell system according to an embodiment of the present invention.
Fig. 2: A front elevation cross section showing the fuel cell module in a fuel cell system according to an embodiment of the present invention.
Fig. 3: A cross section along line III-III in Fig. 2.
Fig. 4: A partial cross section showing an individual fuel cell unit in a fuel cell system according to an embodiment of the present invention.
Fig. 5: A perspective view showing a fuel cell stack in a fuel cell system according to an embodiment of the present invention.
Fig. 6: A block diagram showing a fuel cell assembly according to an embodiment of the present invention.
Fig. 7: A timing chart showing the operation at startup of a fuel cell assembly according to an embodiment of the present invention.
Fig. 8: A timing chart showing the operation of a fuel cell system according to an embodiment of the present invention when stopped.
Fig. 9: A control table of the startup processing procedure in a fuel cell system according to an embodiment of the present invention.
Fig. 10: A flow chart showing control executed by a control section.
Fig. 11: A flow chart showing control executed by a control section.
Fig. 12: A timing chart showing the operation of a fuel cell system according to an embodiment of the present invention.
Fig. 13: A timing chart showing the operation of a fuel cell system according to an embodiment of the present invention.
Fig. 14: A timing chart showing the operation of a fuel cell system according to an embodiment of the present invention.
Fig. 15: An example of a conventional system for supplying electrical power to a residence using a fuel cell.

### Embodiments of the Invention

0024 Next, referring to the attached drawings, we discuss a solid oxide fuel cell system (SOFC) according to an embodiment of the present invention.

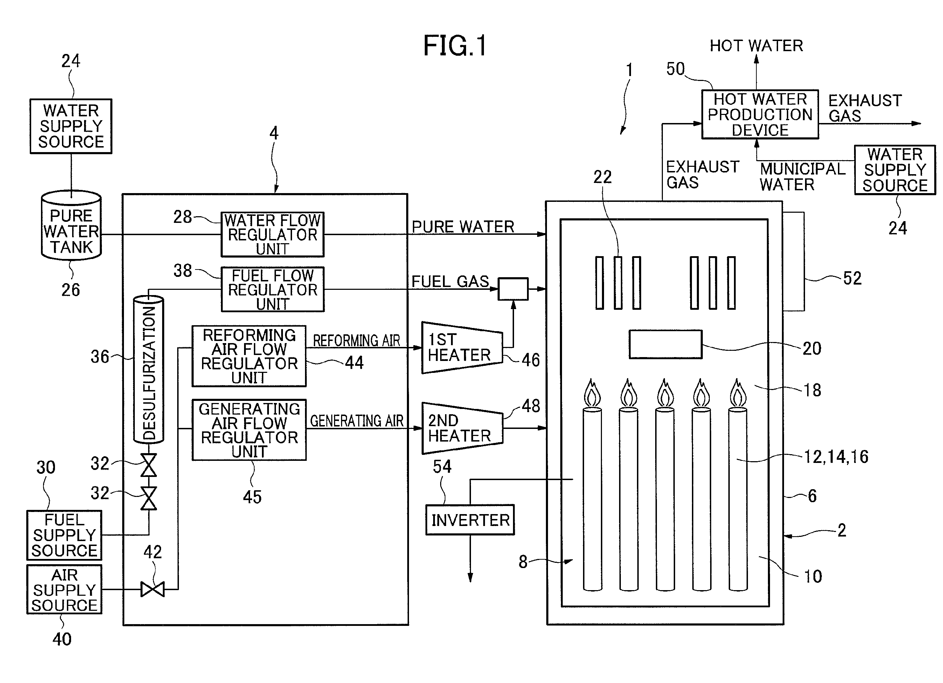

Fig. 1 is an overview schematic showing an solid oxide fuel cell system (SOFC) according to an embodiment of the present invention. As shown in Fig. 1, solid oxide fuel cell system (SOFC) 1 according to an embodiment of the present invention comprises a fuel cell module 2 and an auxiliary unit 4.

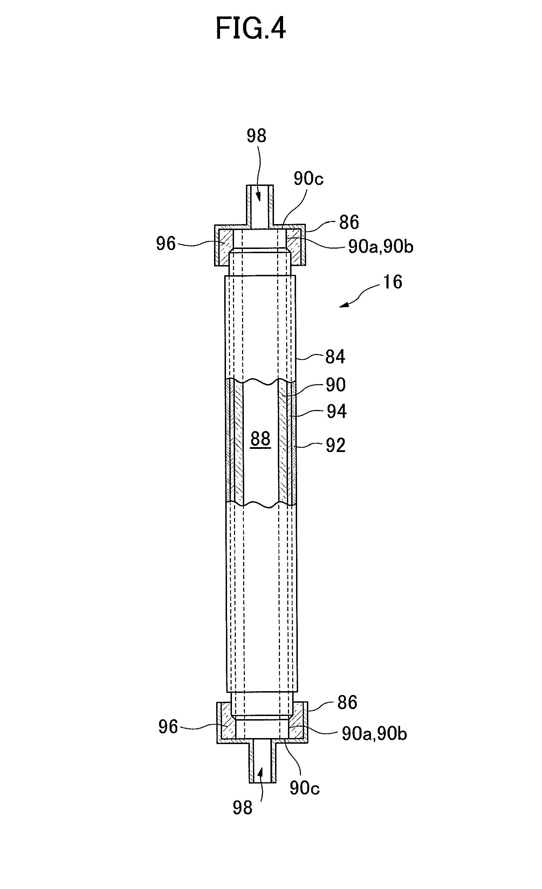

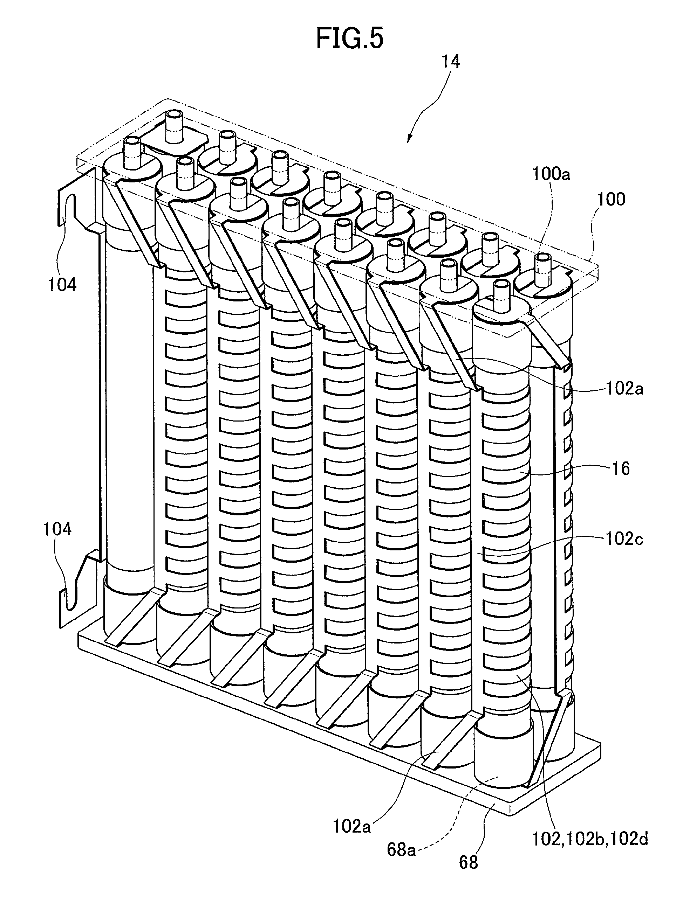

0025 Fuel cell module 2 comprises a housing 6; inside this housing 6, a sealed space 8 is formed, mediated by thermal insulation (not shown; thermal insulation is not an essential structure, and be can be omitted). Note that it is acceptable not to provide thermal insulation. Fuel cell assembly 12, which performs an electricity generating reaction using fuel gas and oxidant (air), is disposed on generating chamber 10, under this sealed space 8. This fuel cell assembly 12 comprises ten fuel cell stacks 14 (see Fig. 5); fuel cell stacks 14 comprise 16 individual fuel cell units 16 (see Fig. 4). Thus fuel cell assembly 12 has 160 individual fuel cell units 16, and all of these individual fuel cell units 16 are connected in series.

0026 A combustion chamber 18 is formed above the aforementioned generating chamber 10 in fuel cell module 2 sealed space 8; residual fuel gas and residual oxidizer (air) not used in the electricity generating reaction are burned in this combustion chamber 18, producing exhaust gas.

Reformer 20 for reforming fuel gas is disposed above this combustion chamber 18; reformer 20 is heated to a temperature at which the reforming reaction can occur by the combustion heat of the residual gas. Furthermore, air heat exchanger 22 for receiving heat from reformer 20 and heating air to suppress temperature drops in reformer 20 is disposed above reformer 20.

0027 Next, auxiliary unit 4 comprises pure water tank 26, which stores water from water supply source 24 and uses a filter to produce pure water, and water flow volume regulator unit 28 (a motor-driven "water pump" or the like), which regulates the flow volume of water supplied from this holding tank. Auxiliary unit 4 comprises gas shutoff valve 32 for shutting off fuel gas such as municipal gas supplied from fuel supply source 30, desulfurizer 32 for removing sulfur from fuel gas, and fuel flow regulator unit 38 (a motor-driven "water pump" or the like) for regulating the flow volume of fuel gas. Furthermore, auxiliary unit 4 comprises: an electromagnetic valve 42 for shutting off air, which is the oxidant supplied from air supply source 40, reform air flow regulator unit 44 and generating air flow regulator unit 45 (a motor-driven "water pump" or the like), which regulate the flow volume air, first heater 46 for heating reforming air supplied to reformer 20, and second heater 48 for heating air supplied to the electrical generating chamber. This first heater 46 and second heater 48 are provided in order to efficiently raise the temperature at startup, but may also be omitted.

0028 Next, a hot water production device 50, supplied with exhaust gas, is connected to fuel cell module 2. Tap water is supplied from water supply source 24 to this hot water production device 50; this tap water becomes hot water using the heat of the exhaust gas, and is supplied to an external hot water holding tank, not shown.

A control box 52 for controlling the amount of fuel gas supplied, etc. is connected to the fuel cell module 2.

Furthermore, an inverter 54 serving as an electrical power extraction unit (power conversion unit) for supplying electrical power generated by the fuel cell module to the outside is connected to fuel cell module 2.

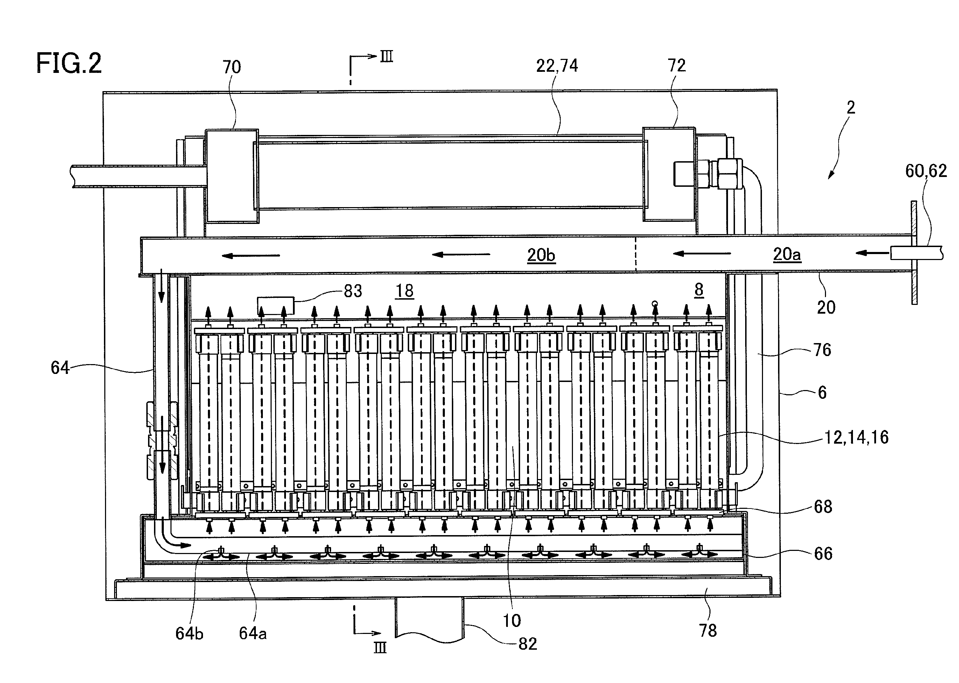

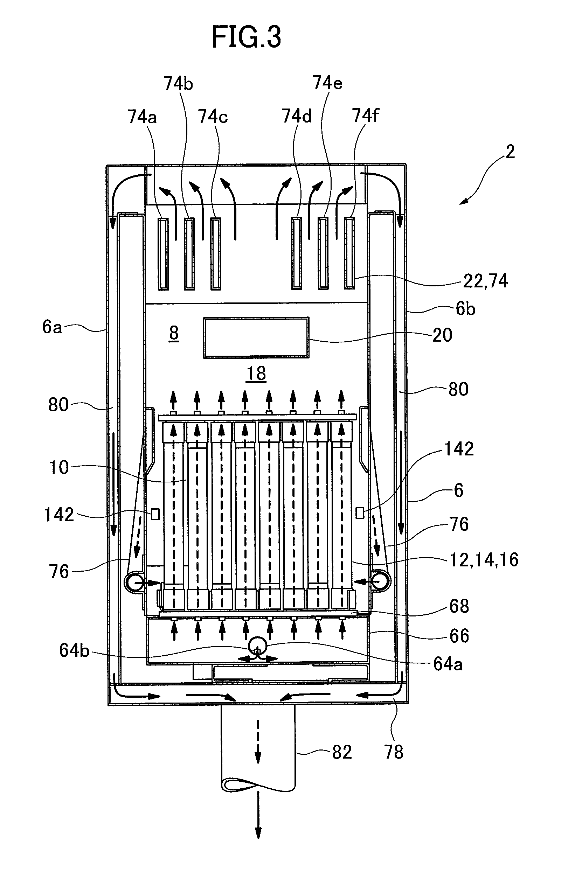

0029 Next, using Figs. 2 and 3, we explain the internal structure of a solid oxide fuel cell system (SOFC) according to the present embodiment of the invention. Fig. 2 is a side view cross section showing the fuel cell module in a solid oxide fuel cell system (SOFC) according to an embodiment of the invention; Fig. 3 is a cross section along line III-III of Fig. 2.

As shown in Figs. 2 and 3, starting from the bottom in the sealed space 8 within the fuel cell module 2 housing 6, a fuel cell assembly 12, a reformer 20, and an air heat exchanger 22 are arranged in sequence, as described above.

0030 A pure water guide pipe 60 for introducing pure water into the upstream end of reformer 20, and a reform gas guide pipe 62 for introducing fuel gas and reforming air to be reformed, are attached to reformer 20; a vaporizing section 20a and a reforming section 20b are formed in sequence starting from the upstream side within reformer 20, and these reforming sections 20a and 20b are filled with reforming catalyst. Fuel gas and air, blended with steam (pure water) introduced into reformer 20, is reformed using the reforming catalyst with which reformer 20 is filled. Reforming catalysts in which nickel is applied to the surface of aluminum spheres, or ruthenium is imparted to the surface of aluminum spheres, are used as appropriate.

0031 A fuel gas supply line 64 is connected to the downstream end of reformer 20; this fuel gas supply line 64 extends downward, then further extends horizontally within a manifold formed under fuel cell assembly 12. Multiple fuel supply holes 64b are formed on the bottom surface of the horizontal portion 64a of fuel gas supply line 64; reformed fuel gas is supplied into manifold 66 from these fuel supply holes 64b.

0032 A lower support plate 68 provided with through holes for supporting the above-described fuel cell stack 14 is attached at the top of manifold 66, and fuel gas in manifold 66 is supplied into fuel cell units 16.

0033 Next, air heat exchanger 22 is provided above reformer 20. This air heat exchanger 22 comprises an air concentration chamber 70 on the upstream side and two air distribution chambers 72 on the downstream side; this air concentration chamber 70 and distribution chambers 72 are connected using six air flow conduits 74. Here, as shown in Fig. 3, three air flow conduits 74 form a set (74a, 74b, 74c, 74d, 74e, 74f); air in air concentration chamber 70 flows from each set of air flow conduits 74 to the respective air distribution chambers 72.

0034 Air flowing in the six air flow conduits 74 of the air heat exchanger 22 is pre-heated by exhaust gas rising after combustion in combustion chamber 18.

Air guide pipes 76 are connected to each of the respective air distribution chambers 72; these air guide pipes 76 extend downward, communicating at the bottom end side with the lower space in generating chamber 10, and introducing preheated air into generating chamber 10.

0035 Next, an exhaust gas chamber 78 is formed below manifold 66. As shown in Fig. 3, a vertically extending exhaust gas conduit 80 is formed on the inside of front surface 6a and rear surface 6b, which are faces in the longitudinal direction of housing 6; the top end of exhaust gas chamber conduit 80 communicates with the space where air heat exchanger 22 is disposed, and the bottom end communicates with exhaust gas chamber 78. An exhaust gas discharge pipe 82 is connected at approximately the center of the bottom surface of the exhaust gas chamber 78; the downstream end of this exhaust gas discharge pipe 82 is connected to the above-described hot water production device 50 shown in Fig. 1.

As shown in Fig. 2, an ignition device 83 for starting the combustion of fuel gas and air is disposed on combustion chamber 18.

0036 Next, referring to Fig. 4, we explain fuel cell units 16. Fig. 4 is a partial cross section showing the fuel cell units of the solid oxide fuel cell system (SOFC) according to an embodiment of the invention.

As shown in Fig. 4, fuel cell units 16 are furnished with a fuel cell 84 and internal electrode terminals 86, respectively connected to the terminals at the top and bottom of fuel cell 84.

Fuel cell 84 is a tubular structure extending in the vertical direction, furnished with a cylindrical internal electrode layer 90, on the inside of which are formed a fuel gas flow path 88, a cylindrical external electrode layer 92, and an electrolyte layer 94 between internal electrode layer 90 and external electrode layer 92. This internal electrode layer 90 is a fuel electrode through which fuel gas passes, and has a (-) polarity, while the external electrode layer 92 is an air-contacting electrode with a (+) polarity.

0037 The internal electrode terminals 86 attached at the top and bottom ends of fuel cell units 16 have the same structure, therefore we here specifically discuss internal electrode terminal 86 attached at the top end. The top portion 90a of inside electrode layer 90 comprises an outside perimeter surface 90b and top end surface 90c, exposed to electrolyte layer 94 and outside electrode layer 92. Inside electrode terminal 86 is connected to the outer perimeter surface of inside electrode layer 90 through conductive seal material 96, and is electrically connected to inside electrode layer 19 by direct contact with the top end surface 90c of inside electrode layer 90. A fuel gas flow path 98 communicating with inside electrode layer 90 fuel gas flow path 88 is formed at the center portion of inside electrode terminal 86.

0038 Inside electrode layer 90 is formed, for example, from at least one of the following: a mixture of Ni with zirconia doped with Ca or at least one rare earth element selected from among Y, Sc, or the like; a mixture of Ni with ceria doped with at least one element selected from among rare earth elements; or a mixture of Ni with lanthanum gallate doped with at least one element selected from among Sr, Mg, Co, Fe, or Cu.

0039 Electrolyte layer 94 is formed, for example, from at least one of the following: zirconia doped with at least one type of rare earth element selected from among Y, Sc, or the like; ceria doped with at least one type of element selected from among rare earth elements; or lanthanum gallate doped with at least one element selected from Sr or Mg.

0040 The outside electrode layer 92 is formed, for example, from at least one of the following: lanthanum manganite doped with at least one element selected from among Sr or Ca; lanthanum ferrite doped with at least one element selected from among Sr, Co, Ni, or Cu; lanthanum cobaltite doped with at least one element selected from among Sr, Fe, Ni, or Cu; silver, or the like.

0041 Next, referring to Fig. 5, we explain fuel cell stack 14. Fig. 5 is a perspective view showing the fuel cell stack in a solid oxide fuel cell system (SOFC) according to an embodiment of the present invention.

As shown in Fig. 5, fuel cell stack 14 is furnished with 16 fuel cell units 16; the top inside and bottom inside of these fuel cell units 16 are respectively supported by a lower support plate 68 and upper support plate 100. Through holes 68a and 100a, through which inside electrode terminal 86 can penetrate, are provided on this lower support plate 68 and outer support plate 100.

0042 In addition, a collector 102 and an external terminal 104 are attached to fuel cell units 16. This collector 102 is integrally formed by a fuel electrode connecting portion 102a, electrically connected to inside electrode terminal 86 attached to inside electrode layer 90 serving as the fuel electrode, and by an air electrode connecting portion 102b, electrically connected to the entire external perimeter of outside electrode layer 92 serving as the air electrode. Air electrode connecting portion 102b is formed of a plumb portion 102c extending vertically along the surface of outside electrode layer 92, and multiple horizontal portions 102d extending horizontally from this vertical portion 102c along the surface of outside electrode layer 92. Fuel electrode connecting portion 102a extends in a straight line, in an upward or downward diagonal direction from the vertical portion 102c of air electrode connecting portion 102b, toward inside electrode terminals 86 positioned vertically on fuel cell units 16.

0043 Furthermore, electrode terminals 86 at the top and bottom ends of the two fuel cell units 16 positioned at the end of fuel cell stack 14 (at the front and back on the left side in Fig. 5) are respectively connected to outside terminals 104. These external terminals 104 are connected to external terminals 104 (not shown) at the ends of adjacent fuel cell stack 14, and as described above, all of the 160 fuel cell units 16 are connected in series.

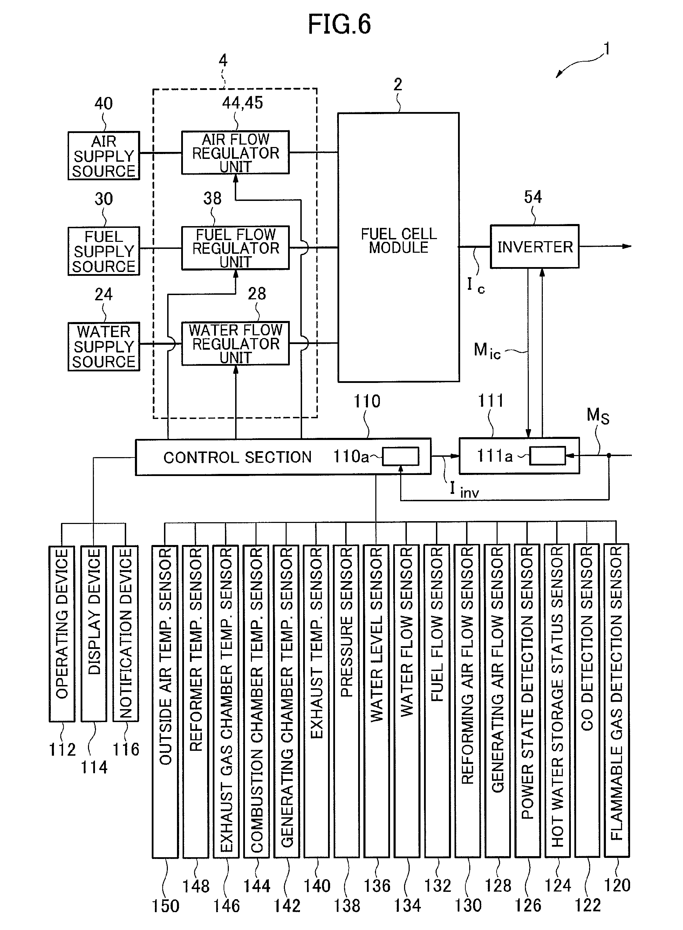

0044 Next, referring to Fig. 6, we discuss the sensors attached to the solid oxide fuel cell system (SOFC) according to the present embodiment. Fig. 6 is a block diagram showing a solid oxide fuel cell system (SOFC) according to an embodiment of the present invention.

As shown in Fig. 6, a solid oxide fuel cell system 1 comprises a control unit 110; connected to this control section 110 are: an operating device 112 provided with operating buttons such as "ON" or "OFF" for user operation; a display device 114 for displaying various data such as generator output (watts); and a notification device 116 for issuing warnings during abnormal states, etc. Note that this notification device 116 may also be connected to a remote control center to inform the control center of anomalies.

0045 Next, signals from the various sensors described below are input to control unit 110.

First, flammable gas detection sensor 120 is for detecting gas leaks, and is attached to fuel cell module 2 and auxiliary unit 4.

CO detection sensor 122 is for sensing whether CO in the exhaust gas, which is supposed to be exhausted to the outside via exhaust gas conduit 80, etc., has leaked into the external housing (not shown) which covers fuel cell module 2 and auxiliary unit 4.

Water reservoir state detection sensor 124 is for sensing things such as the temperature and amount of hot water in a hot water heater (not shown).

0046 Electrical power state detection sensor 126 is for sensing current, voltage, etc. in inverter 54 and a distribution panel (not shown).

Generator air flow detection sensor 128 is for detecting the flow volume of generating air supplied to generating chamber 10.

Reforming air flow volume sensor 130 is for detecting the volume of reforming air flow supplied to reformer 20.

Fuel flow volume sensor 132 is for detecting the flow volume of fuel gas supplied to reformer 20.

0047 Water flow volume sensor 134 is for detecting the flow volume of pure water supplied to reformer 20.

Water level sensor 136 is for detecting the water level in pure water tank 26.

Pressure sensor 138 is for detecting pressure on the upstream side outside reformer 20.

Exhaust temperature sensor 140 is for detecting the temperature of exhaust gas flowing into hot water production device 50.

0048 As shown in Fig. 3, generating chamber temperature sensor 142 is disposed on the front surface side and rear surface side around fuel cell assembly 12, and has the purpose of detecting the temperature near fuel cell stack 14 and estimating the temperature of fuel cell stack 14 (i.e., of the fuel cell 84 itself).

Combustion chamber temperature sensor 144 is for detecting the temperature in combustion chamber 18.

Exhaust gas chamber temperature sensor 146 is for detecting the temperature of exhaust gases in exhaust gas chamber 78.

Reformer temperature sensor 148 is for detecting the temperature of reformer 20; it calculates the reformer 20 temperature from the intake and exit temperatures on reformer 20.

If a solid oxide fuel cell system (SOFC) is positioned outdoors, outside air temperature sensor 150 detects the temperature of the outside atmosphere. Sensors to detect atmospheric humidity and the like may also be provided.

0049 Signals from these various sensors are sent to control unit 110; control unit 110 sends control signals to water flow regulator unit 28, fuel flow regulator unit 38, reforming air flow regulator unit 44, and generating air flow regulator unit 45 based on data from the sensors, and controls the flow volumes in each of these units.

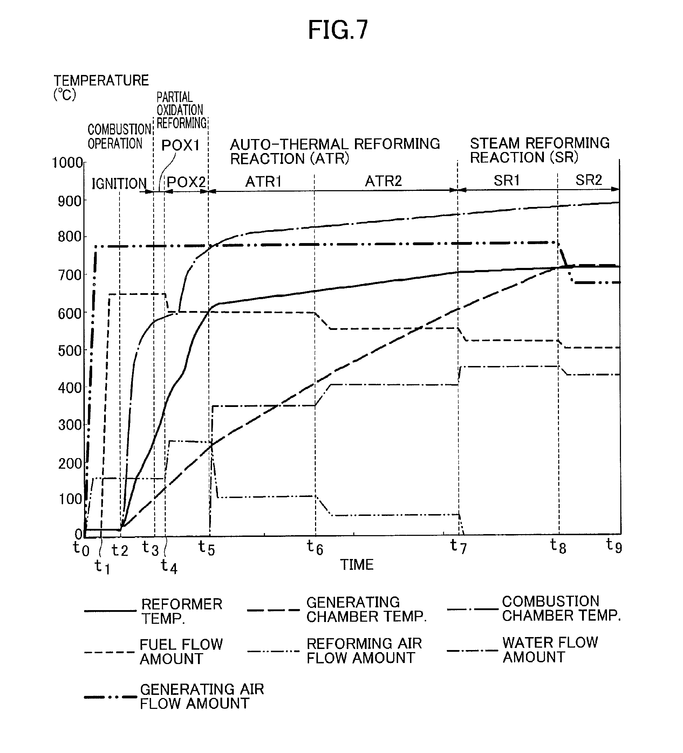

0050 Next, referring to Fig. 7, we explain the operation of a solid oxide fuel cell system (SOFC) according to the present embodiment at the time of start up. Fig. 7 is a timing chart showing the operation of a solid oxide fuel cell system (SOFC) according to an embodiment of the present invention at the time of start up.

At first, the operation starts in a no-load state, i.e., with the circuit containing fuel cell module 2 in an open state, in order to warm up fuel cell module 2. At this point current does not flow in the circuit, therefore fuel cell module 2 does not generate electricity.

0051 First, reforming air is supplied from reforming air flow regulator unit 44 through first heater 46 to reformer 20 in fuel cell module 2. Simultaneously, generating air is supplied from generating air flow regulator unit 45 through second heater 48 to the air heat exchanger 22 on fuel cell module 2, and this generating air reaches generating chamber 10 and combustion chamber 18.

Immediately thereafter, fuel gas is also supplied from fuel flow regulator unit 38, and fuel gas into which reforming air is blended passes through reformer 20, fuel cell stack 14, and fuel cell units 16 to reach combustion chamber 18.

0052 Next, ignition device 83 causes ignition, and fuel gas and air (reforming air and generating air) supplied to combustion chamber 18 are combusted. This combustion of fuel gas and air produces exhaust gas; generating chamber 10 is warmed by this exhaust gas, and when the exhaust gas rises in the sealed space 8 of fuel cell module 2, the fuel gas, which includes reforming air in reformer 20, is warmed, as is also the generating air inside air heat exchanger 22.

0053 At this point, fuel gas into which reforming air is blended is supplied to reformer 20 by fuel flow regulator unit 38 and reforming air flow regulator unit 44, therefore the partial oxidation reforming reaction POX given by Expression (1) proceeds. This partial oxidation reforming reaction POX is an exothermic reaction, and therefore has good startup characteristics. This elevated-temperature fuel gas is supplied from fuel gas supply line 64 to the bottom of fuel cell stack 14, and by this means fuel cell stack 14 is heated from the bottom; combustion chamber 18 is also heated by the combustion of fuel gas and air, so that fuel stack 14 is also heated from above, thereby enabling an essentially uniform rise in temperature along the vertical direction of fuel cell stack 14. Even though the partial oxidation reforming reaction POX is progressing, the ongoing combustion reaction between fuel gas and air is continued in combustion chamber 18.

CₘHₙ + xO₂→aCO₂ + bCO + cH₂ (1)

0055 After the partial oxidation reforming reaction starts, when reformer temperature sensor 148 senses that reformer 20 has reached a predetermined temperature (e.g., 600°C), a pre-mixture of fuel gas and reforming air is supplied to reformer 20 by water flow regulator unit 28, fuel flow regulator unit 38, and reforming air flow regulator unit 44. At this point the auto-thermal reforming reaction ATR, which makes use of both the aforementioned partial oxidation reforming reaction POX and the steam reforming reaction SR described below, proceeds in reformer 20. This auto-thermal reforming reaction ATR can be internally thermally balanced, therefore the reaction proceeds in a thermally independent fashion inside reformer 20. In other words, if oxygen (air) is abundant, heat emission by the partial oxidation reforming reaction POX dominates, and if steam is abundant, the endothermic steam reforming reaction SR dominates. At this stage, the initial stage of startup has passed and some degree of elevated temperature has been achieved within generating chamber 10, therefore even if the endothermic reaction is dominant, no major drop in temperature will be caused. Also, the combustion reaction continues within combustion chamber 18 even while the auto-thermal reforming reaction ATR is proceeding.

0056 When, after starting autothermal reforming reaction ATR, reformer temperature sensor 146 senses that reformer 20 has reached a predetermined temperature (e.g., 700°C), the supply of reforming air by reforming air flow regulator unit 44 is stopped and the supply of steam by water flow regulator unit 28 is increased. A gas containing no air and containing only fuel gas and steam is thus supplied to reformer 20, where the steam reforming reaction SR of Expression (3) proceeds.

CₘHₙ+XO₂+yH₂O→aCO₂+bCO+cH₂ (2)

CₘHₙ+xH₂O→aCO₂+bCO+cH₂ (3)

0058 This steam reforming reaction SR is an endothermic reaction, therefore the reaction proceeds while thermal balance is maintained with the combustion heat from combustion chamber 18. At this stage, fuel cell module 2 is in the final stages of startup, therefore the temperature has risen to a sufficiently high level within generating chamber 10 so that no major temperature drop is induced in generating chamber 10 even though an endothermic reaction is proceeding. Also, the combustion reaction continues to proceed in combustion chamber 18 even though the steam reforming reaction SR is proceeding.

0059 In this manner, after fuel cell module 2 has been ignited by ignition device 83 the temperature inside generating chamber 10 gradually rises due to the sequentially proceeding partial oxidation reforming reaction POX, auto-thermal reforming reaction ATR, and steam reforming reaction SR. Next, when the temperatures of the interior of generating chamber 10 and individual fuel cells 84 reach a predetermined generating temperature below the rated temperature at which fuel cell module 2 can be stably operated, the circuit including fuel cell module 2 is closed and electrical generation by fuel cell module 2 begins, such that current flows in the circuit. Generation of electricity by fuel cell module 2 causes fuel cell 84 itself to emit heat, such that the temperature of fuel cell 84 also rises. As a result, the rated temperature for operating fuel cell module 2, for example 600 [°C] to 800 [°C], is reached.

0060 In order to maintain the rated temperature thereafter, fuel gas and air are supplied in a quantity greater than the fuel gas and air consumed by individual fuel cells 84, and combustion in combustion chamber 18 is continued. Note that during electrical generation, generation of electricity by the high reforming-efficiency steam reforming reaction SR proceeds.

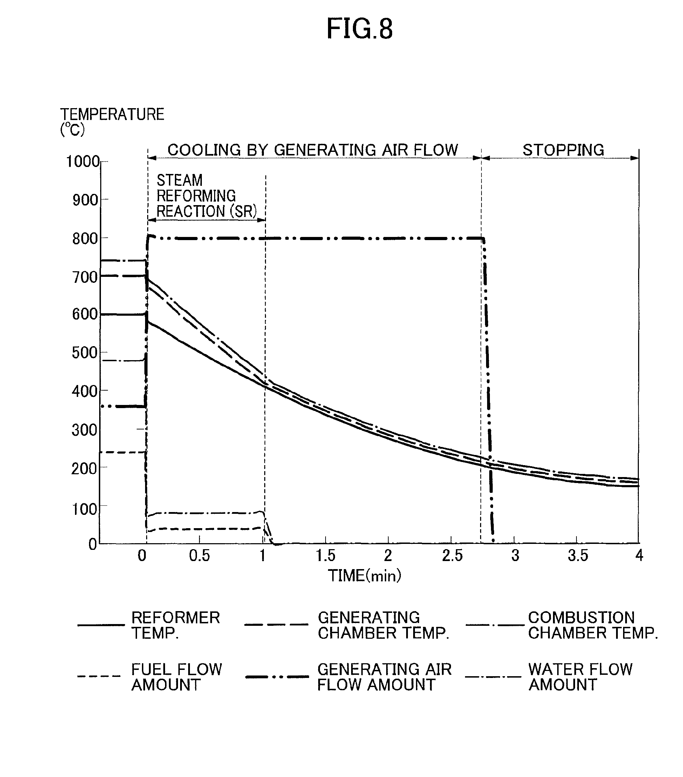

0061 Next, referring to Fig. 8, we discuss the operation when stopping the solid oxide fuel cell system (SOFC) of the present embodiment. Fig. 8 is a timing chart showing what occurs upon stopping the operation of solid oxide fuel cell system (SOFC) of the present embodiment.

As shown in Fig. 8, when the operation of fuel cell module 2 is stopped, fuel flow regulator unit 38 and water flow regulator unit 28 are first controlled to reduce the quantity of fuel gas and steam being supplied to reformer 20.

0062 When stopping the operation of fuel cell module 2, the amount of generating air supplied by reforming air flow regulator unit 44 into fuel cell module 2 is being increased at the same time that the amount of fuel gas and steam being supplied to reformer 20 is being reduced; fuel cell assembly 12 and reformer 20 are air cooled to reduce their temperatures. Thereafter when the reformer 20 temperature has dropped to a predetermined temperature, for example 400 [°C], the supply of fuel gas and steam to the reformer 20 is stopped, and the reformer 20 steam reforming reaction SR is ended. Supply of generating air continues until the temperature in reformer 20 reaches a predetermined temperature, e. g. 200°C, and when the predetermined temperature is reached, the supply of generating air from generating air flow regulator unit 45 is stopped.

0063 Thus in the present embodiment when operation of the fuel cell module 2 is stopped, the steam reforming reaction SR by reformer 20 and cooling by generating air are used in combination, so that operation of the fuel cell module can be stopped relatively quickly.

0064 Next, referring to Fig. 6, we explain the control of solid oxide fuel cell system 1 according to an embodiment of the invention.

First, as shown in Fig. 6, solid oxide fuel cell system 1 comprises control section 110, which is a fuel cell controller, and inverter control section 111, which is an inverter controller.

0065 Control section 110 comprises first power demand detection device 110a, which detects power demand based on a power demand signal Ms input from power demand detector 206 (Fig. 15). The total power demand consumed by facilities like residence 200 (Fig. 15) is covered by grid power supplied from commercial power sources and power supplied from solid oxide fuel cell system 1. If using a current transformer as power demand detector 206, the grid current (purchased current) can be obtained as a monitor signal to serve as power demand monitor signal Ms, therefore power demand can be obtained, together with grid power and electrical generation interconnected power, from the AC voltage at the output terminal obtained from inverter 54, and from the electrical generation interconnected output power. First power demand detection device 110a can also be used, by indirectly obtaining that information from inverter 54. In the present embodiment, it is the grid power of the total power demand that is input to control section 110 as the power demand monitor signal Ms, but it is also possible for the control section to use total power demand as the power demand monitor signal.

0066 Also, control section 110 is constituted to control water flow volume regulator unit 28, fuel flow regulator unit 38, and reform air flow regulator unit 44, etc. based on power demand monitor signal Ms and the like. Control section 110 sets the extractable current value linv based on input signals from various sensors and on power demand monitor signal Ms, and outputs this value to inverter control section 111. Specifically, control section 110 comprises a microprocessor, memory, programs for operating these, and so forth.

0067 Inverter control section 111 comprises a second power demand detection device 111 a, and detects power demand based on the power demand monitor signal Ms input from power demand detector 206 (Fig. 15). When using a current transformer for power demand detector 20, the grid current (purchased current) is obtained as a monitor signal for use as power demand monitor signal Ms, therefore power demand is obtained together with grid power and electrical generation interconnected power using an output terminal AC voltage from a voltage detection means provided on an output terminal, obtained from inverter 54, and the electrical generation interconnected output power from an output power detection means on the output section. That information can also be conveyed to control section 110. Inverter control section 111 controls inverter 54 based on power demand monitor signal Ms and the extractable current value linv input from control section 110, and actual extracted current Ic is extracted from fuel cell module 2 within a range not exceeding extractable current value Iinv. Specifically, inverter control section 111 comprises a microprocessor, memory, programs for operating these, and the like.

0068 Control section 110 comprises an extractable current setting means for sequentially setting extractable current value Iinv, being the maximum current extractable from fuel cell module 2 at a given time in response to the state of fuel cell module 2. Inverter control section 111 controls inverter 54 independently of control section 110, extracts actual extracted current Ic in a range not exceeding the extractable current value linv input from control section 110, and supplies facilities such as residence 200 (Fig. 15). Note that in the present embodiment the control section 110 control cycle is 500 [msec], and the inverter control section 111 control cycle is 1 [msec] or less. Thus control section 110 is operated at a control cycle necessary and sufficient to control a slow-response fuel cell module 2, and inverter control section 111 is operated at a short control cycle so that power can be extracted from inverter 54 in response to power demand, which fluctuates rapidly. Also, control of control section 110 and inverter control section 111 is not synchronized, and controls inverter 54 independently of control section 110 based on the extractable current value linv input from control section 110, and on power demand monitor signal Ms.

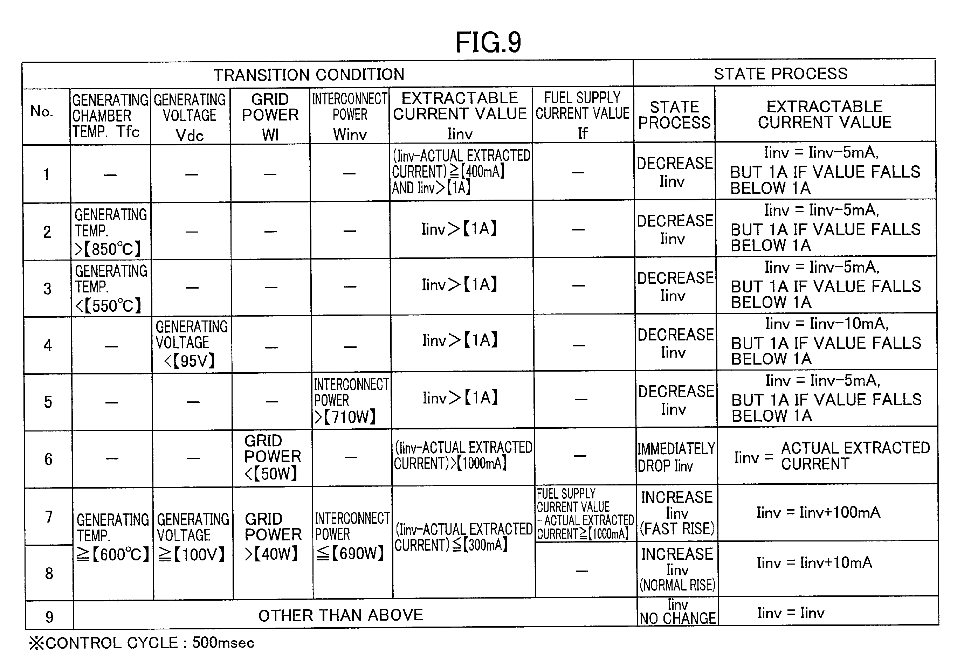

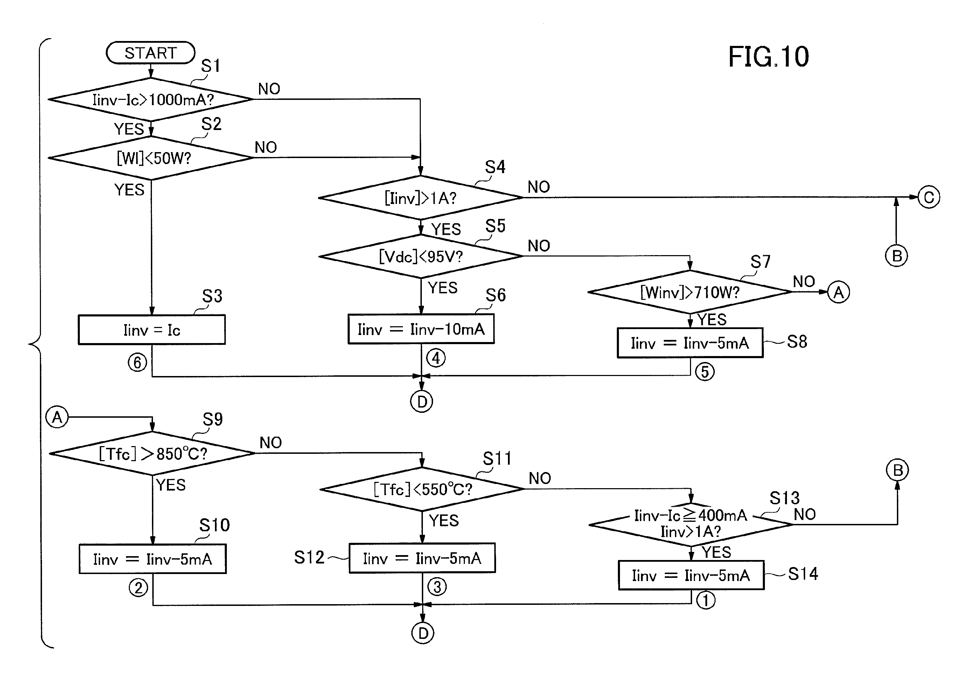

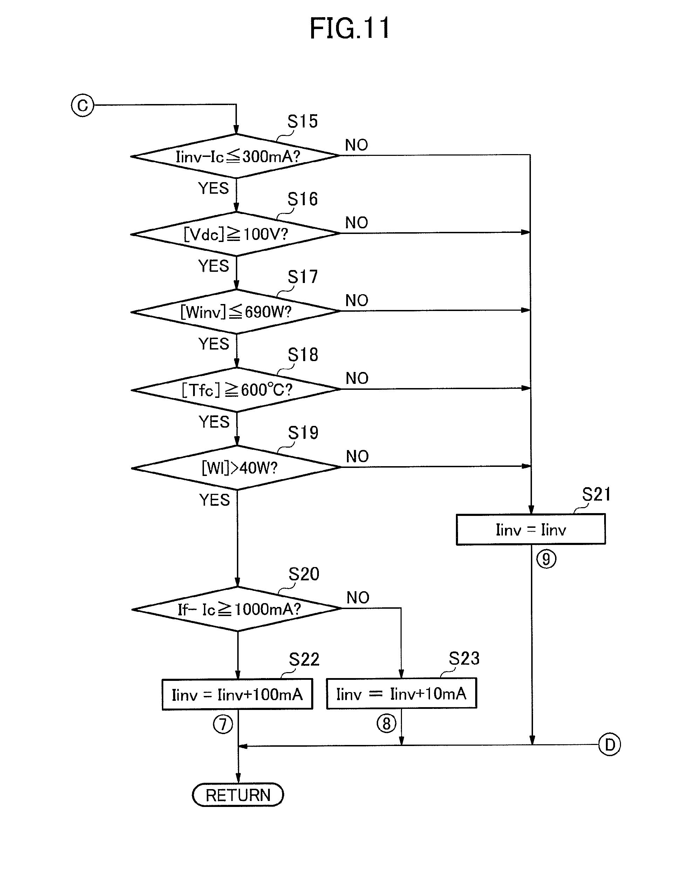

0069 Next, referring to Figs. 9 through 14, we explain the operation of solid oxide fuel cell system 1 according to an embodiment of the invention. Fig. 9 is a control table for setting extractable current value linv using control section 110. Figs. 10 and 11 are flowcharts for determining extractable current value linv by applying the control table shown in Fig. 9.

0070 As shown in Fig. 9, control section 110 increases, decreases, or maintains extractable current value linv based on generating chamber temperature Tfc, generating voltage Vdc output from fuel cell module 2, grid power WI, being the power supplied to facilities such as residences from commercial power sources, interconnect power Winv, being the power output from inverter 54, and fuel supply current value If.

Generating chamber temperature Tfc is the temperature of the generating chamber 10 housed in individual fuel cell units 16; it is detected by generating chamber temperature sensors 142 and input to control section 110. Note that in this Specification, temperatures serving as indicators of the fuel cell module 2 generating capacity, such as generating chamber temperature Tfc, are referred to as the "fuel cell module temperature."

0071 Generated voltage Vdc is the output voltage output from fuel cell module 2. Grid power WI is the power supplied by commercial power sources to residences and the like, which corresponds to total facility power demand minus power supplied by fuel cells, and is detected based on power demand monitor signal Ms.

Interconnect power Winv is the power output from inverter 54. Power actually extracted at inverter 54 from fuel cell module 2 is detected by power state detecting sensor 126, and power converted from this power is output from inverter 54. The actual extracted current Ic [A] actually output from fuel cell module 2 is obtained based on the power detected by power state detecting sensor 126. Therefore power state detecting sensor 126 functions as an extracted current detection device.

0072 Fuel supply current value If is a base current value for obtaining the fuel supply amount, and corresponds to the current value which can be generated using the fuel supply amount (L/min) supplied to fuel cell module 2. Therefore the fuel supply current value If is set so as never to fall below extractable current value Iinv.

Control section 110 determines whether the current state of fuel cell module 2 matches any of line Nos. 1 through 9 in Fig. 9, and changes or maintains the extractable current value linv shown on the right-most column of Fig. 9.

0073 For example, if all the conditions noted in line No. 1 of Fig. 9 are simultaneously met, control section 110 changes extractable current value linv to reduce it by 5 [mA], as shown in the right column of line No. 1. As explained above, in the present embodiment the control cycle of control section 110 is 500 [msec], therefore if the state continues in which the line No. 1 conditions are met, the extractable current value linv is lowered by 5 [mA] every 500 [msec]. In this case the extractable current value linv is reduced at a current reduction rate of change of 10 [mA/sec].

0074 Similarly, if all the conditions noted in line No. 8 of Fig. 9 are simultaneously met, control section 110 changes extractable current value linv so as to increase it by 10 [mA], as shown in the right hand column of line No. 8. Therefore if the state continues in which the line No. 8 conditions are met, extractable current value linv is raised at a first current rise rate of 20 [mA/sec].

0075 If none of the conditions in line Nos. 1-8 of Fig. 9 is satisfied, then the line No. 9 condition is matched, and extractable current value linv is maintained as is without change.

0076 Next, referring to Figs. 10 and 11, we explain the procedure for judging the Fig. 9 control table conditions. Note that letters A-D in Figs. 10 and 11 indicate processing endpoints. For example, the flow transition from "C" in Fig. 10 to "C" in Fig. 11.

0077 As explained below, even under conditions when extractable current value linv should be increased, such as when power demand is increasing, control section 110 increases extractable current value linv only when none of the predetermined multiple increase limit conditions is met. Furthermore, the increase limit conditions include multiple current reducing conditions and current maintenance conditions, and when these conditions are met, extractable current value linv is reduced or maintained. The multiple current reducing conditions (steps S5, S7, S9, S11, and S13 in Fig. 10) are applied with priority before the multiple current maintenance conditions (steps S15, S16, S17, S18, and S19 in Fig. 11).

0078 First, step S1 in Fig. 10 is a step for judging whether an extremely large deviation has occurred between extractable current value linv and actual extracted current Ic, whereby a judgment is made as to whether a deviation of greater than 1000 [mA] has occurred between the two. The case in which a deviation larger than 1000 [mA] occurs for the first time during a control cycle when the difference between extractable current value linv and actual extracted current Ic is small is the case in which a sharp reduction in total power demand occurs, or actual extracted current Ic is sharply reduced for some reason, producing a deviation, in which case the system advances to step S2.

0079 In step S2, a judgment is made as to whether grid power WI is less than 50 [W]. If grid power WI is less than 50 [W], there is a high probability of a "reverse current flow (grid power WI turns negative)" occurring, in which output power from inverter 54 flows into the commercial power supply. Therefore this state is judged to be one in which inverter 54 has suddenly reduced actual extracted current Ic in order to prevent the occurrence of a reverse current flow due to a large drop in total power demand according to the determinations made in S2 and S1. Note that the reason for setting the value of grid power WI in S2 at 50 [W] is to provide a 50 [W] margin so that reverse current flow will not occur under any circumstance.

0080 Next, if a YES is judged in both S1 and S2, i.e., in cases when an anti-reverse current flow control is performed by inverter 54 in conjunction with a large drop in total power demand, control section 110 in step S3 suddenly reduces the value of the extractable current value linv instructed to inverter control section 111 down to the value of the actual extracted current Ic (corresponding to Fig. 9, No. 6). With the completion of the processing in step S3, one iteration of the Fig. 10 and Fig. 11 flowcharts is completed. Inverter 54 extracts actual extracted current Ic in a range not exceeding the value of extractable current Iinv, therefore by reducing the extractable current value linv such that the extractable current value linv = actual extracted current Ic, inverter 54 is restricted from responses such as arbitrarily increasing extracted current beyond the current extracted current value Ic. If total power demand suddenly drops, there is a high probability that total power demand will soon after quickly recover (increase), but if inverter 54 suddenly extracts power in order to respond to the recovered total power demand when there is a large deviation exceeding 1000 [mA], there can be a control overshoot or the like resulting in the inverter 54 performing a power extraction which mistakenly exceeds power demand or extractable current value Iinv; this is prevented in advance. In other words, with a small deviation such as 1000 [mA] or less, inverter 54 is allowed to quickly perform a power extraction up to extractable current value Iinv, which is at a higher level than actual extracted current Ic, since no control is executed to cause the extractable current value linv to be the actual extracted current Ic. This is a further measure, taken to enable quick following of the recovery of total power demand, since no problem such as excessive power extraction due to overshoot arises if the deviation is small.

0081 On the other hand, if a judgment is made in the step S1 and S2 determinations that the situation is not one in which a reverse current associated with a very large drop in total power demand will arise, the system advances to step S4. In step S4 a judgment is made of whether extractable current value linv is greater than 1 A. If extractable current value linv is greater than 1 A, the system advances to step S5, and a judgment is made as to whether generating voltage Vdc is less than 95 V. If generating voltage Vdc is less than 95 V, the system advances to step S6.

0082 In step S6, control section 110 reduces the value of the extractable current value linv instructed to inverter control section 111 by 10 [mA] (corresponding to line No. 4 in Fig. 9). With the completion of the step S6 processing, one iteration of the Fig. 10 and Fig. 11 flowcharts is completed. If the processing in step S6 is continuously executed each time the Fig. 10 flowchart is executed, the extractable current value linv is decreased at a current decrease change rate of 20 [mA/sec]. If generating voltage Vdc is less than 95 V, a voltage decrease is assumed to occur due to degradation of the fuel cell module when power is extracted at inverter 54 from fuel cell module 2, therefore by reducing extractable current value Iinv, the current extracted at inverter 54 is suppressed, thereby lightening the load imposed on fuel cell module 2.

0083 Meanwhile, if generating voltage Vdc is 95 V or greater in step S5, the system advances to step S7. In step S7 a judgment is made as to whether interconnect power Winv exceeds 710 W. If interconnect power Winv exceeds 710 W, the system advances to step S8, and step S8 control section 110 reduces the value of the extractable current value linv instructed to inverter control section 111 by 5 [mA] (corresponding to line No. 5 in Fig. 9). In other words, if interconnect power Winv exceeds 710 [W], the output power from fuel cell module 2 exceeds rated power, therefore the current extracted from fuel cell module 2 is reduced so as not to exceed rated power. With the completion of the processing in step S8, one iteration of the Fig. 10 and Fig. 11 flowcharts is completed. If the processing in step S8 is continuously executed each time the Fig. 10 flowchart is executed, the extractable current value linv is decreased at a current decrease change rate of 10 [mA/sec].

Thus by using those of the multiple current reduction conditions which apply, control section 110 changes the extractable current value linv so that the rates of change at which the extractable current value linv is reduced differ.

0084 In step S7, meanwhile, if interconnect power Winv is 710 [W] or less, the system advances to step S9. In step S9, a judgment is made as to whether generating chamber temperature Tfc exceeds 850 [°C]. If generating chamber temperature Tfc exceeds 850 [°C], the system advances to step S10; in step S10, control section 110 reduces the value of the extractable current value linv instructed to inverter control section 111 by 5 [mA] (corresponding to line No. 2 in Fig. 9). I.e., if generating chamber temperature Tfc exceeds 850 [°C], the appropriate operating temperature for fuel cell module 2 is exceeded, therefore the value of extractable current linv is reduced and the system waits for a drop in temperature. With the completion of the processing in step S10, one iteration of the Fig. 10 and Fig. 11 flowcharts is completed. If the processing in step S10 is continuously executed each time the Fig. 10 flowchart is executed, extractable current value linv is decreased at a current decrease change rate of 10 [mA/sec].

0085 On the other hand, if generating chamber temperature Tfc is 850 [°C] or less in step S9, the system advances to step S11. In step S11 a judgment is made as to whether generating chamber temperature Tfc is less than 550 [°C]. If generating chamber temperature Tfc is less than 550 [°C], the system advances to step S12; in step S12, control section 110 reduces the value of the extractable current value linv instructed to inverter control section 111 by 5 [mA] (corresponding to line No. 3 in Fig. 9). In other words, if generating chamber temperature Tfc is less than 550 [°C], the temperature is below the appropriate temperature at which fuel cell module 2 can generate electricity, so the value of extractable current linv is reduced. Fuel consumed for electrical generation is thus reduced, and fuel is directed to heating individual fuel cell units 16, raising the temperature. With the completion of the processing in step S12, one iteration of the Fig. 10 and Fig. 11 flowcharts is completed. If the processing in step S12 is continuously executed each time the Fig. 10 flowchart is executed, extractable current value linv is decreased at a current decrease change rate of 10 [mA/sec].

0086 On the other hand, if generating chamber temperature Tfc is 550 [°C] or greater in step S11, the system advances to step S13. In step S13 a judgment is made as to whether the difference between extractable current value linv and actual extracted current Ic exceeds 400 [mA] and extractable current value linv exceeds 1 A. If the difference between the extractable current value linv and actual extracted current Ic exceeds 400 [mA] and the extractable current value linv exceeds 1 A, the system advances to step S14, and in step S14, control section 110 reduces the value of the extractable current value linv instructed to inverter control section 111 by 5 [mA] (corresponding to line No. 1 in Fig. 9). In other words, if the difference between extractable current value linv and actual extracted current Ic exceeds 400 [mA], there is too little extracted current Ic actually extracted from fuel cell module 2 relative to the extractable current value linv which can be extracted, and fuel is being wastefully supplied, so the extractable current linv is reduced and fuel wastage is suppressed. With the completion of the processing in step S14, one iteration of the Fig. 10 and Fig. 11 flowcharts is completed. If the processing in step S14 is continuously executed each time the Fig. 10 flowchart is executed, extractable current value linv is decreased at a current decrease change rate of 10 [mA/sec].

0087 Thus if even one of the multiple current reduction conditions (steps S5, S7, S9, S11, and S13 in Fig. 10) applies, extractable current value linv is reduced even when the power demand is rising (steps S6, S8, S10, S12, S14).

0088 In step S4, meanwhile, when extractable current value linv is 1 [A] or less, and in step S13, when the difference between extractable current value linv and actual extracted current value Ic is 400 [mA] or less, the system advances to step S15 in Fig. 11.

In step S15, a judgment is made as to whether the difference between extractable current value linv and actual extracted current value Ic is 300 [mA] or less; in step S16 a judgment is made as to whether generated voltage Vdc is 100 [V] or greater; in step S17, a judgment is made as to whether extractable current value linv is 690 [W] or less; in step S18 a judgment is made as to whether generating chamber temperature Tfc is 600 [°C] or more; and in step S19, a judgment is made as to whether grid power WI exceeds 40 [W]. If all of these conditions are satisfied, the system advances to step S20; if there is even one which is not satisfied (corresponding to line No. 9 in Fig. 9), the system advances to step S21. In step S21, the value of extractable current linv is not changed but maintained at the previous value, and one iteration of the Fig. 10 and Fig. 11 flowcharts is completed.

0089 Thus in the solid oxide fuel cell system 1 of the present embodiment, if certain conditions are not met, even when power demand is rising, extractable current value linv is kept constant (step S21 in Fig. 11). Focusing on generating chamber temperature Tfc, when generating chamber temperature Tfc exceeds the upper limit threshold value of 850 [°C], extractable current value linv is lowered (steps S9, S10 in Fig. 10), and if generating chamber temperature Tfc is less than the lower limit threshold value of 600 [°C], the extractable current value linv is maintained (steps S18, S21 in Fig. 11). If generating chamber temperature Tfc is even lower, below 550 [°C], extractable current value linv is reduced (steps S11, S12 in Fig. 10).

0090 On the other hand, in the processing which occurs in step S20 and beyond, the value of extractable current linv is increased. Control section 110 increases the extractable current value linv (steps S22, S23 in Fig. 11) only when none of the multiple current maintenance conditions (steps S15, S16, S17, S18, and S19 in Fig. 11) is matched.

0091 I.e., when the difference between extractable current value linv and actual extracted current Ic exceeds 300 [mA] (step S15), that difference between extractable current value linv and actual extracted current Ic is relatively large, therefore the extractable current value linv should not be increased. If generating voltage Vdc is lower than 100 V (step S16), then extractable current value linv should not be raised, increasing the current extractable from fuel cell module 2. Furthermore, if interconnect power Winv exceeds 690 [W] (step S17), the output power from fuel cell module 2 has already essentially reached the rated output power, therefore the current which can be extracted from fuel cell module 2 should not be increased.

0092 In addition, if generating chamber temperature Tfc is less than 600 [°C] (step S18), fuel cell module 2 has not reached a temperature at which electricity can be sufficiently generated, therefore the extractable current value linv should not be raised, and current extractable from fuel cell module 2 increased, thereby placing a load on individual fuel cell units 16. If grid power WI is less than 40 [W] (step S19), "reverse power flow" can easily occur, therefore the current extractable from fuel cell module 2 should not be increased.

0093 If all the conditions from steps S15 through S19 are met, the system advances to step S20. In step S20 a judgment is made as to whether the difference between fuel supply current value If and actual extracted current value Ic is 1000 [mA] or greater. A fuel gas supply amount corresponding to fuel supply current value If is obtained and supplied to fuel cell module 2, and [the system] is generating electricity. In other words [this] value is a conversion of the electrical current value which can be generated by fuel cell module 2 using that fuel. For example, if a fuel supply amount [L/min] corresponding to a fuel supply current value If = 5 [A] is being supplied, fuel cell module 2 is potentially capable of safely and stably outputting a 5 [A] current. Therefore if the difference between the fuel supply current value If and the actual extracted current value Ic is 1000 [mA], this means that an amount of fuel capable of outputting 1 [A] more current than the actually generated extracted current value Ic is being supplied to fuel cell module 2.

0094 If, in step S20, the difference between fuel supply current value If and actual extracted current value Ic is 1000 [mA] or greater, the system advances to step S22; if less than 1000 [mA], the system advances to step S23. In step S22, because a large amount of extra fuel is being supplied to fuel cell module 2, control section 110 increases the value of the extractable current value linv instructed to the inverter control section 111 by 100 [mA] (corresponding to line No. 9 in Fig. 9), rapidly raising the extractable current value Iinv. The completion of the step S22 processing completes one iteration of the Fig. 10 and 11 flowcharts. If the processing in step S22 is continuously executed each time the Fig. 11 flowchart is executed, extractable current value linv is raised at a second current increase rate of change, being 200 [mA/sec].

0095 On the other hand, the conditions for raising extractable current value linv are present in step S23, but since this is not a situation in which a large amount of extra fuel is being supplied to fuel cell module 2, control section 110 increases the value of extractable current linv instructed to inverter control section 111 by 10 [mA] (corresponding to line No. 8 in Fig. 9), gradually raising the extractable current value Iinv. With the completion of the processing in step S23, one iteration of the Fig. 10 and Fig. 11 flowcharts is completed. If the processing in step S23 is continuously executed each time the Fig. 11 flow chart is executed, extractable current value linv will be increased at a first current increase change rate of 20 [mA/sec].

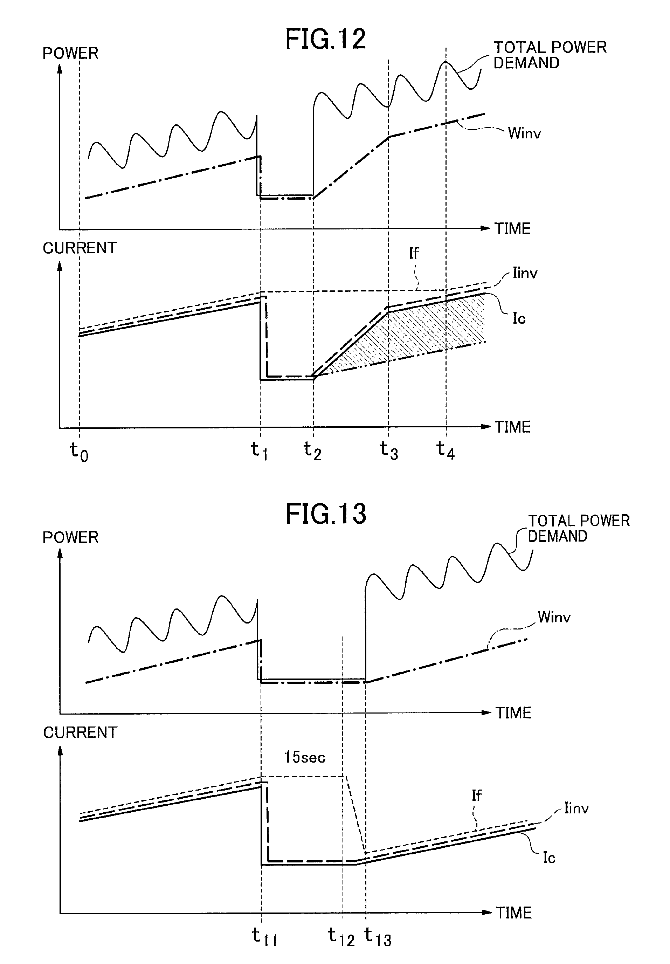

0096 Next, referring to Figs. 12 through 14, we explain one example of the operation of solid oxide fuel cell system 1 according to the present embodiment.

Fig. 12 shows a graph of power on the top and current on the bottom.

0097 First, as shown by the thin solid line on the top half of Fig. 12, if the total power demand from facilities such as residence 200 etc. is gradually increasing as it fluctuates, extractable current value linv will also be gradually increased in response (times to-t1 in Fig. 12). During this interval, step S23 in the Fig. 11 flowchart is repeated, and extractable current value linv is raised at a first current rise rate of 20 [mA/sec]. If extractable current value linv is input from control section 110, inverter control section 111 controls 54 independently from the control of control section 110, and an actual extracted current Ic not exceeding extractable current value linv is extracted from fuel cell module 2 At times t0-t1 in Fig. 12, the total power demand at all times exceeds extractable current value Iinv, therefore actual extracted current Ic matches extractable current value Iinv, which is the upper limit value of what can be extracted, and interconnect power Winv is also raised together with actual extracted current Ic. In such circumstances, notwithstanding the fact that inverter control section 111 is controlling inverter 54 independently from control section 110, actual extracted current Ic is under the dominance of control section 110. Note that fuel supply current value If is raised slightly ahead of extractable current value Iinv. The insufficient power resulting from the difference between the total power demand and interconnect power Winv is made up by grid power WI.

0098 Next, at time t1 in Fig. 12, if total power demand suddenly decreases, inverter control section 111 controls inverter 54 in response to this reduction, causing a decrease in the actual extracted current Ic (interconnect power Winv) extracted from fuel cell module 2. Control section 110 causes extractable current value linv to be reduced to the same value as actual extracted current Ic (step S3 in Fig. 10) so that no excessive power extraction occurs due to the previously noted overshoot. At the same time, at time t1, control section 110 maintains the value of fuel supply current If at the previous value, not reducing it. This is because suddenly reducing the fuel supply amount (fuel supply current value If) together with extractable current value linv invites a sudden temperature drop, so that not only does the operation of fuel cell module 2 become unstable, and since there is a high probability that the power demand will increase immediately after a sudden drop in power demand, one would like to be able follow this quickly, but because of the reduction in the temperature of fuel cell module 2, a long time period is required for recovery, so the fuel supply current value If is not reduced. Therefore if extractable current value linv is suddenly reduced, fuel supply current value If is reduced at a further delay. In a state whereby fuel supply current value If is being maintained immediately after the reduction in the extractable current value Iinv, there is a margin in the fuel supply amount to the fuel cell module 2 relative to extractable current value Iinv.

0099 At time t1-t2 in Fig. 12, the total power demand is still reduced, therefore generating chamber 10 maintains a fixed extractable current value linv (step S21 in Fig. 11), and the fuel supply current value If is also maintained at a fixed value, with extra fuel.

Next, when total power demand again rises at time t2, because fuel supply current value If is maintained at a fixed level and there is extra margin in the fuel supply amount to fuel cell module 2, control section 110 causes the value of the extractable current value linv to rapidly rise at a second current rise rate of change which is 200 [mA/sec] greater than the normal rate of change (the first current rise rate of change) (step S22 in Fig. 11). This results in improved load following characteristics relative to total power demand. I.e., when the value of extractable current linv output from control section 110 is raised, inverter control section 111 extracts actual extracted current Ic from fuel cell module 2 within the range of this increased extractable current value Iinv. Rapidly raising the value of extractable current linv enables the extraction of a large power from fuel cell module 2 suited to fuel supply current value If, so that the amount of grid power WI used can be suppressed.

0100 Note that in the present embodiment the extractable current value linv is raised at a 200 [mA/sec] large current rise rate of change, which is the second current rise rate of change, and at a 20 [mA/sec] normal current rise rate of change, which is the first current rise rate of change. If the current rise rate of change is the first current rise rate of change only, extractable current value linv rises gradually from time t2, as shown by the double dot and dash line in Fig. 12. Therefore if the current rise rate of change is not raised rapidly, then even if the fuel supply amounts are the same, actual extracted current Ic is reduced by only the amount of the diagonally shaded region in Fig. 12, and fuel is wastefully expended. Conversely, the problem of slow temperature change, which is a major issue for solid oxide fuel cells resulting from the use of power demand prediction control in this technology, is solved, and load following characteristics can be rapidly raised.

Note that in this embodiment the fuel supply current value If is maintained as is, but if there is too great a deviation between fuel supply current value If and extractable current value Iinv, the large over-increase in the amount of extra fuel will be wasteful even considering the re-restoration of total power demand, so it can said that an even more preferable response is to maintain the fuel supply current value while keeping the deviation amount from becoming too large.

0101 At time t3 in Fig. 12, when the difference between fuel supply current value If and actual extracted current Ic is reduced, control section 110 changes the current rise rate of change to 20 [mA/sec], which is the first current rise rate of change, making the rise in extractable current value linv gradual (step S23 in Fig. 11). This is to prevent the occurrence of fuel depletion caused by the operational offset with inverter control section 111, which controls inverter 54 independently of control section 110 when extractable current value linv is suddenly raised in a state in which there is little margin in the fuel supply amount (the fuel supply current value If).

0102 Next, when the value of extractable current linv has risen and the fuel supply current value If is approached at time t4 in Fig. 12, the value of fuel supply current value If is also raised together with extractable current value Iinv, so a certain reserve amount is secured relative to extractable current value Iinv.

0103 Next, referring to Fig. 13, we explain another example of the operation of solid oxide fuel cell system 1 according to the present embodiment.

In the operational example shown in Fig. 12, after total power demand drops at time t1, total power demand shifts to rising during the period when the fuel supply current value If is being maintained. Relative to this, in the example shown in Fig. 13, the time after total power demand drops until this shift to rising is lengthy. Since supplied fuel is wasted when the time during which a large fuel supply current value If is maintained, fuel supply current value If is reduced after a predetermined fuel reduction standby time tw elapses.

0104 After the sharp drop in total power demand at time t11 in Fig. 13, total power demand stays low until time t13. In the present embodiment, control section 110 is constituted so that if total power demand drops sharply and extractable current value linv is reduced to actual extracted current Ic, the fuel supply current value If is maintained at a fixed level thereafter during the interval of the 15 sec fuel reduction standby time tw.

0105 In the example shown in Fig. 13, after the sharp drop in total power demand at time t11, that total power demand stays low even at time t12 when the fuel reduction standby time tw has elapsed, therefore control section 110 reduces the fuel supply current value If (the fuel supply amount) at a predetermined reduction rate of change starting at time t12. A value is selected for this reduction rate of change such that fuel cell module 2 can maintain appropriate operation. Note that in the example shown in Fig. 13, fuel supply current value If is reduced after the elapse of fuel reduction standby time tw, but if the difference between extractable current value linv and fuel supply current value If is less than a certain amount, fuel supply current value If is maintained without being reduced, notwithstanding the elapse of fuel reduction standby time tw. Thus minute fluctuations in fuel supply current value If can be prevented from adversely affecting the operation of fuel cell module 2.

0106 Next, when total power demand rises at time t13 in Fig. 13, control section 110 causes extractable current value linv and fuel supply current value If to rise. However, the rise in extractable current value linv at this point does not occur immediately after the sharp reduction in extractable current value Iinv; the fuel supply current value If is also reduced, so the rate of change in the extractable current value linv current rise is set at the normal value, which is the first current rise rate of change of 20 [mA/sec]. I.e., at time t13 in Fig. 13, the conditions of step S20 in Fig. 11 are not met, and step S23 is executed.

Note that the present embodiment is constituted so that after reducing the fuel supply current value If for 15 seconds, maintenance of the excess fuel level is stopped, but it can be said that in cases where total power demand declines even further, the probability that total power demand will recover and rise is low, therefore rapidly reducing fuel supply current value If without waiting the 15 seconds to maintain fuel supply current value If is even more preferable.

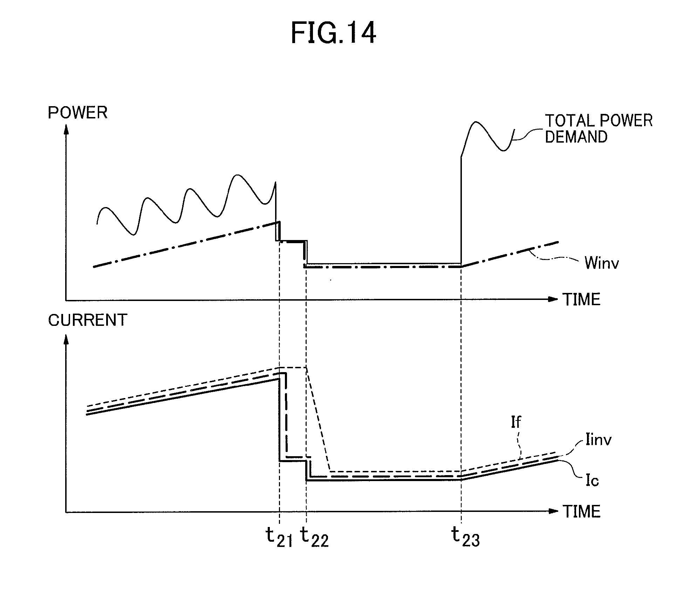

0107 Next, referring to Fig. 14, we explain another example of the operation of solid oxide fuel cell system 1 according to the present embodiment.

In the operational example shown in Fig. 14, after a sharp drop in total power demand, that total power demand again sharply drops, without rising. In such cases the probability that total power demand will quickly shift to rising is assumed to be low, even if fuel reduction standby time tw has elapsed after the first sharp drop, therefore control section 110 reduces fuel supply current value if.

0108 In the example shown in Fig. 14, after a sharp drop in total power demand at time t21, at time t22 before the elapse of the 15 sec fuel reduction standby time tw, total power demand again drops sharply. Thus if the difference between fuel supply current value If and extractable current value linv expands, control section 110 reduces the fuel supply current value If (the fuel supply amount) at a predetermined reduction rate of change starting at time t22, even if fuel reduction standby time tw has not yet elapsed since the first sharp reduction in total power demand. Next, when total power demand rises at time t23 in Fig. 14, extractable current value linv and fuel supply current value If are increased.

0109 In the solid oxide fuel cell system 1 of the embodiment according to the present invention, control section 110 controls fuel flow regulator unit 38 (Figs. 12-14) so that fuel supply current value If (the fuel supply amount) is reduced more than the reduction in extractable current value Iinv, even when the extractable current value linv is suddenly reduced, thereby avoiding sudden temperature drops, etc. in fuel cell module 2. Since the fuel supply amount is reduced after a delay following a sudden reduction in extractable current value Iinv, a state arises in which there is extra margin in the fuel supply amount relative to extractable current value linv (time t1-t2 in Fig. 12). In such cases, the controller increases the extractable current value linv at a second current rise rate of change which is larger than the first current rise rate of change (times t2-t3 in Fig. 12), therefore fuel wastage can be suppressed and generating efficiency improved.

0110 Thus using solid oxide fuel cell system 1, problems such as fuel depletion can be reliably avoided, enabling improved generating efficiency while stably operating fuel cell module 2.

0111 Using the solid oxide fuel cell system 1 of the embodiment according to the present invention, if a difference greater than a predetermined amount is present over the fuel decrease wait time (15 [sec]) (time t12 in Fig. 13) after the extractable current value decreases (time t11 in Fig. 13), or if the difference between the current corresponding to the fuel supply amount (fuel supply current value If) and extractable current value linv increases (time 22 in Fig. 14), the fuel supply amount is decreased, therefore stable operation of the fuel cell assembly 12 can be balanced with an improvement in generating efficiency. I.e., sudden total temperature drops in fuel cell module 2 and the like can be avoided by reducing the fuel supply amount at a delay after extractable current value linv has fallen, but if the time persists during which the fuel supply amount is not reduced after a reduction in extractable current value Iinv, fuel waste can easily occur, so the amount of fuel supplied is reduced after the elapse of a fuel reduction waiting time or the like.

0112 Using the solid oxide fuel cell system 1 of the embodiment according to the present invention, if the difference between actual extracted current value Ic and extractable current value linv is equal to or less than a predetermined amount (step S1 in Fig. 10), extractable current value linv is not reduced down to actual extracted current value Ic, therefore if an immediate recovery occurs after a significant drop in power demand, extractable current value linv is maintained at a level higher than actual extracted current value Ic, so inverter 54 is able to freely follow the recovery in total power demand within that range, and load following can be improved without concern for overshooting or the like. Furthermore, in cases where the difference between actual extracted current value Ic and extractable current value linv exceeds the predetermined amount of 1000 [mA], extractable current value linv is reduced down to actual extracted current value Ic (step S3 in Fig. 10), therefore fuel wastage can be suppressed while stably operating fuel cell module 2.

0113 Using solid oxide fuel cell system 1 of the embodiment according to the present invention, extractable current value linv is reduced down to the minimum necessary actual extracted current value Ic (step S3 in Fig. 10; time t1 in Fig. 12; time t11 in Fig. 13; and time t21 in Fig. 14) after delaying a reduction in the fuel supply amount, therefore fuel wastage can be fully suppressed while assuring secure operation of fuel cell module 2.

0114 Using the solid oxide fuel cell system 1 of the embodiment according to the present invention, in cases where the fuel supply amount is maintained at a fixed level after extractable current value linv is suddenly decreased in order to follow the drop in actual extracted current value Ic (times t1-t2 in Fig. 12), extractable current value linv is increased (time t2-t3 in Fig. 12) at a large current rise rate of change when the power demand begins to rise, therefore extractable current value linv can be rapidly increased in a state in which there is reliable margin in the fuel supply amount, and following characteristics relative to changes in power demand can be improved while securing stable operation of fuel cell module 2.

### Explanation of Reference Numerals

0115
1: solid oxide fuel cell system
2: fuel cell module
4: auxiliary unit
8: sealed space
10: generating chamber
12: fuel cell assembly
14: fuel cell stack
16: individual fuel cell units (solid oxide fuel cells)
18: combustion chamber
20: reformer
22: air-heat exchanger
24: water supply source
26: pure water tank
28: water flow volume regulator unit (water supply means)
30: fuel supply source
38: fuel flow regulator unit (fuel supply device)
40: air supply source
44: reform air flow regulator unit
45: generating air flow regulator unit
46: first heater
48: second heater
50: hot water production apparatus
52: control box
54: inverter
83: ignition device
84: fuel cell
110: control section (fuel cell controller)
110a: first power demand detection device
111: inverter control section (inverter controller)
111 a: second power demand detection device
112: operating device
114: display device
116: warning device
126: power state detecting sensor (extracted current detection device)
132: fuel flow volume sensor (fuel supply amount detection sensor)
138: pressure sensor (reformer pressure sensor)
142: generating chamber temperature sensor (temperature detection means)
150: outside air temperature sensor
200: residence
202: fuel cell
204: grid power
206: current transformer
208: fuel cell module
210: filter
212: inverter

## Claims

1. A solid oxide fuel cell system for generating variable power in response to power demand, comprising:
a fuel cell module that generates electricity using supplied fuel;
a fuel supply device that supplies fuel to the fuel cell module;
a power demand detection device that detects power demand;
a controller that controls the amount of fuel supplied by the fuel supply device based on the power demand detected by the power demand detection device, and that sets an extractable current value, being the maximum current value extractable from the fuel cell module in accordance with the condition of the fuel cell module;
an inverter that converts current from the fuel cell module to alternating current within a range not exceeding the extractable current value; and
an extracted current detection device that detects an actual extracted current value actually extracted from the fuel cell module at the inverter;
wherein the controller controls the fuel supply device so that when increasing the extractable current value, the extractable current value is increased at a predetermined first current increase rate of change, whereas when the actual extracted current value detected by the extracted current detection device decreases, the extractable current value is suddenly decreased, and the fuel supply amount is reduced at more of a delay than the reduction in extractable current value in order to follow this reduction in extractable current value, whereas when power demand begins to increase in a state in which there is extra margin in the fuel supply amount after suddenly reducing the extractable current value, the extractable current value is increased at a second current increase rate of change, which is larger than the first current increase rate of change.

2. The solid oxide fuel cell system according to Claim 1, wherein when the actual extracted current value drops, the controller suddenly reduces extractable current value so as to follow a reduction in actual extracted current value, and then the controller reduces the fuel supply amount, if a difference between the current corresponding to the fuel supply amount and the extractable current value is equal to or greater than a predetermined amount during a predetermined fuel reduction waiting time, or if the difference between the current corresponding to the fuel supply amount and the extractable current value expands.

3. The solid oxide fuel cell system according to Claim 2, wherein if the difference between the actual extracted current value and the extractable current value exceeds a predetermined amount, the controller controls the fuel supply device to reduce the extractable current value, then reduce the fuel supply amount at a delay, whereas if the difference between the actual extracted current value and the extractable current value is equal to or less than the predetermined amount, the controller does not reduce the extractable current value.

4. The solid oxide fuel cell system according to Claim 3, wherein when reducing the extractable current value, the controller reduces the extractable current value down to the actual extracted current value.

5. The solid oxide fuel cell system according to Claim 2, wherein when the actual extracted current value has dropped, the controller suddenly reduces the extractable current value to follow the drop in the actual extracted current value, then if the power demand starts to rise during the fuel supply amount is subsequently maintained at a fixed level, the controller increases the extractable current value at the second current rise rate of change which is larger than the first current rise rate of change.
